# EUROPEAN PATENT APPLICATION

(11) **EP 3 231 775 A1**
(43) Date of publication of application: **18.10.2017**
(21) Application number: 15845924.8
(22) Date of filing: 24.09.2015
(51) Int. Cl.: C02F 11/04, F04B 3/00, F04B 39/00

(54) **WATER PISTON DEVICE AND BIOGAS COMPRESSION SYSTEM USING SAME**

(30) Priority: 29.09.2014 KR 20140130580
(71) Applicant: Lee, Young-Sang, Daejeon 34351 (KR)
(72) Inventor: Lee, Young-Sang, Daejeon 34351 (KR)
(74) Representative: Petraz, Gilberto Luigi
(86) International application number: PCT/KR2015/010095
(87) International publication number: WO 2016/052926

(57) **Abstract**

The present invention relates to a water piston device and a biogas compression system using same, the device and piston being capable of compressing biogas with only water pressure without using an additional apparatus, thereby preventing parts from being corroded by the biogas, resulting in improvement of durability of the parts. The water piston device includes a cylinder to be filled with biogas and water, a biogas inlet/outlet provided at an upper end portion of the cylinder, and a water inlet/outlet provided at a lower end portion of the cylinder, wherein the biogas is compressed by the pressure of water introduced into the cylinder through the water inlet/outlet.

## Description

### Technical Field

The present invention relates to a water piston device and a biogas compression system using same. More particularly, the present invention relates to a water piston device and a biogas compression system, both being capable of compressing biogas using only water pressure without using an additional apparatus, thereby preventing parts thereof from being corroded by biogas, which results in improvement in durability of the parts.

### Background Art

Generally, in anaerobic digestion tanks and landfills for treating high concentration organic waste such as livestock manure, food waste, or sewage sludge, biogas is generated during anaerobic digestion of organic matter.

Biogas mainly includes methane (50 to 70%) and carbon dioxide (30 to 50%), and also a trace amount of impurities such as hydrogen sulfide, ammonia, hydrogen, nitrogen, volatile organic compounds, and siloxane.

Since the most dominant component of the biogas is methane, the biogas is combustible, whereby it can be used as an energy source. Biogas is one of new generation energy sources and is currently used as fuel in the processes of generating electricity or heat, for example, in boilers and cogeneration systems.

According to a conventional art, most of biogas treatment plants are equipped with a pretreatment facility that can eliminate most of all components of biogas except for methane. The pretreatment facility essentially includes compression equipment for compressing biogas.

As the compression equipment, reciprocating type air compressors using a piston (conventional technology) and screw type air compressors are predominantly used. As for these compressors, parts are worn down through repetitive use, which may result in reduced compression of biogas.

In addition, since unrefined biogas contains various kinds of impurities described above, the impurities are likely to come into contact with the parts, thereby wearing the parts down. Therefore, over time, the compression of biogas cannot be adequately performed and durability of compression equipment is deteriorated.

### Disclosure

### Technical Problem

Accordingly, the present invention has been made keeping in mind the above problems occurring in the related art, and the present invention is intended to propose a water piston device and a biogas compression system using same, both being capable of compressing biogas using only water pressure without using an additional apparatus, thereby preventing parts from being corroded by the biogas, resulting in improvement in durability of the parts.

Another object of the present invention is to provide a water piston device and a biogas compression system using same, both reducing the number of parts used to compress biogas, thereby considerably reducing system installation and maintenance costs.

A further object of the present invention is to provide a water piston device equipped with a baffle plate in a cylinder thereof, thereby preventing water from rushing into the cylinder and swirling and sloshing in the cylinder.

A yet further object of the present invention is to provide a water piston device and a bio compression system using same, the bio compression system being cable of considerably reducing a biogas compression time by using a plurality of water piston devices and being capable of maintaining a uniform pressure of water introduced into respective cylinders thereof by using pressure maintaining units.

### Technical Solution

In order to achieve the above object, according to one aspect of the present invention, there is provided a water piston device including:

a cylinder to be filled with biogas and water; a biogas inlet/outlet provided at an upper portion of the cylinder; and a water inlet/outlet provided at a lower portion of the cylinder, the water piston compressing biogas using the pressure of water introduced into the cylinder through the water inlet/outlet.

A baffle plate for preventing water from rushing into the cylinder through the water inlet/outlet may be provided at a lower portion in the cylinder.

A demister filter for preventing water and moisture from escaping from the cylinder through the biogas inlet/outlet may be provided at an upper portion within the cylinder.

A first level switch and a second level switch may be provided respectively at an upper portion and a lower portion of the cylinder to check whether a water level in the cylinder reaches a top dead point and a bottom dead point, respectively.

The cylinder may be provided with a first pressure detection sensor to measure the pressure of the biogas in the cylinder.

The inside of the biogas inlet/outlet may be provided with a check valve allowing the biogas to be supplied to the cylinder, a compressed biogas discharge valve allowing compressed biogas in the cylinder to be discharged out of the cylinder, and a first safety valve allowing the compressed biogas to be discharged out of the cylinder when the pressure of the biogas in the cylinder rises to reach or exceed a predetermined safety pressure.

A three-way water inlet/outlet valve may be connected with the water inlet/outlet to control supply and discharge of water into or out of the cylinder through the water inlet/outlet.

According to another aspect of the present invention, there is provided a biogas compression system using a water piston device,

the biogas compression system including: a blower for supplying biogas; a water piston device connected to the blower and compressing biogas supplied by the blower using the pressure of water; and a water supply/recovery device connected to the water piston device and supplying and recovering water used to compress the biogas.

The water piston device may include: a cylinder having a biogas inlet/outlet provided at an upper portion thereof and connected to the blower and a water inlet/outlet provided at a lower portion thereof and connected to the water supply/recovery device, a biogas adjustment unit installed in the biogas inlet/outlet and adjusting and controlling the flow of biogas introduced into and discharged out of the cylinder; and a three-way water inlet/outlet valve installed in the water inlet/outlet and controlling the flow of water introduced into the cylinder.

The water piston device may further include a sensor unit measuring and controlling states of the water and biogas in the cylinder.

The water supply/recovery device may include a water tank connected to the water piston device and storing water used to compress the biogas, a booster pump supplying water stored in the water tank to the water piston device with a steady water pressure, and a level detection sensor detecting the amount of water stored in the water tank.

The water piston device may include a plurality of water piston devices connected in parallel between the blower and the water supply/recovery device.

A pressure maintaining unit may be connected between the water piston device and the water supply/recovery device to enable a predetermined pressure of water supplied to the water piston device to be maintained.

The pressure maintaining unit may include a pressure tank connected and installed between the water piston device and the water supply/recovery device, a third level switch and a fourth level switch used to check whether water in the pressure tank reaches to a top dead end and a bottom dead end, respectively, a second pressure detection sensor measuring the pressure of the water stored in the pressure tank, and a second safety valve performs control such that compressed biogas is discharged out of the cylinder when the pressure of the water reaches a predetermined safety pressure.

The biogas compression system may further include a control panel used to control operations of the water piston device, the water supply/recovery device, and the pressure maintaining unit.

### Advantageous Effects

According to the present invention, it is possible to compress biogas using only water pressure without using an additional apparatus. Therefore, it is possible to prevent parts of a biogas compression system from being corroded by biogas, thereby having an effect of improving durability of the parts and reducing system installation and maintenance costs.

In addition, according to the present invention, it is possible to considerably reduce a biogas compression time by using a plurality of water piston devices. Furthermore, it is possible to control water pressure such that the pressure of water introduced into cylinders is constantly maintained by using a pressure maintaining unit.

### Description of Drawings

FIG. 1 is a schematic view of a water piston device according to the present invention; and
FIG. 2 is a schematic view of a biogas compression system using a water piston device according to the present invention.

### Best Mode for Invention

Hereinafter, a water piston device and a biogas compression system using same will be described with reference to preferred embodiments and accompanying drawings.

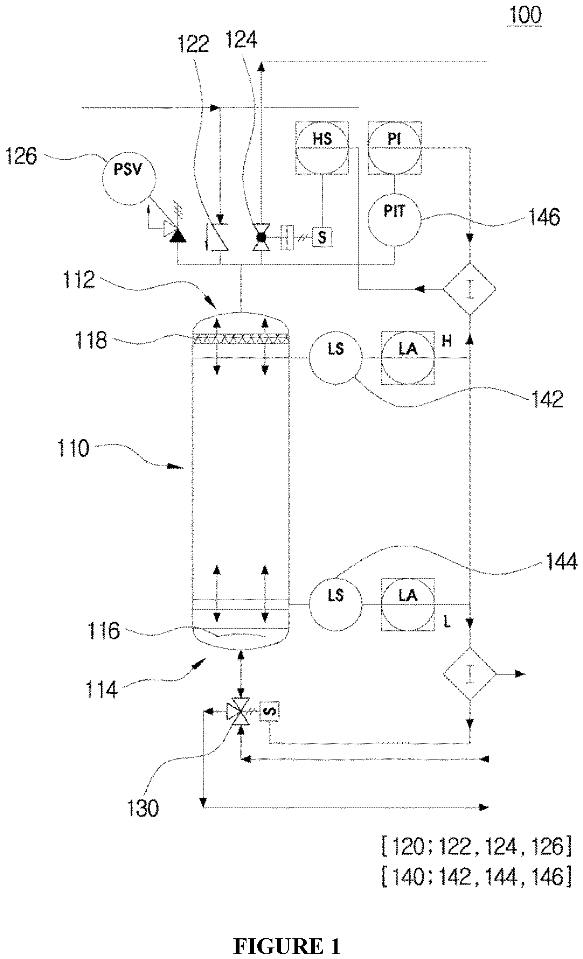

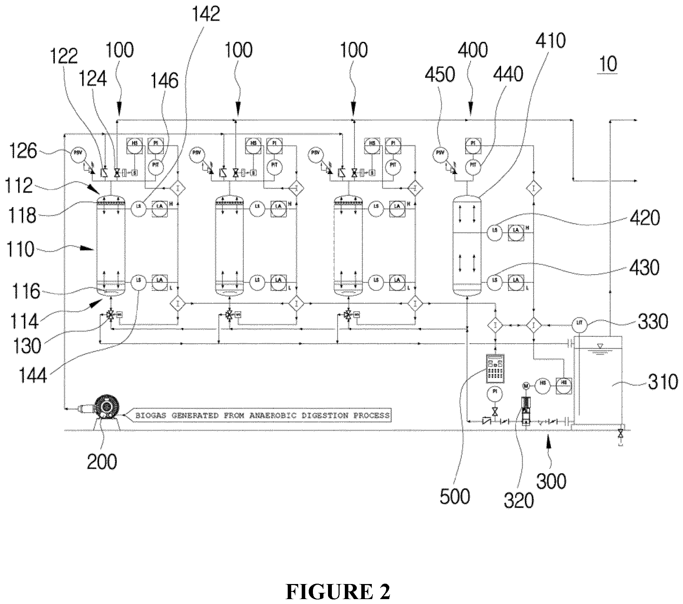

FIG. 1 is a schematic view of a water piston device according to the present invention and FIG. 2 is a schematic view of a biogas compression system using the water piston device according to the present invention.

The present invention relates to a water piston device and a biogas compression system 10 using the water piston device, both being capable of compressing biogas with only water pressure without using an additional apparatus. As illustrated in FIG. 1, according to the present invention, a water piston device 100 includes a cylinder 100 having a biogas inlet/outlet 112 provided at an upper end thereof and a water inlet/outlet 114 provided at a lower end thereof.

Specifically, the upper end of the cylinder 110 is provided with the biogas inlet/outlet 112 through which biogas can be introduced into and discharged out of the cylinder 110, and the lower end of the cylinder 110 is provided with the water inlet/outlet 114 through which water used to compress the biogas contained in the cylinder can be introduced into and discharged out of the cylinder 110. Thus, it is possible to compress biogas with only water pressure applied to the biogas without using an additional means such as a piston or screw. Due to the structure described above, the water piston device according to the present invention has an advantage of preventing parts thereof from being corroded by the biogas.

That is, in a state in which the cylinder 110 is filled with water, the three-way water inlet/outlet valve 130 connected to the water inlet/outlet 114 is opened such that the water in the cylinder 110 is discharged out of the cylinder 110. While the water is being discharged out of the cylinder 110, biogas is introduced into the cylinder 110 through the biogas inlet/outlet 112 until the cylinder 110 is full of the biogas.

In this state, when water (pressurized water having a predetermined pressure) is introduced into the cylinder 110 through the water inlet/outlet 114, the biogas is compressed by the pressure of the water introduced into the cylinder 110. When the biogas is compressed to a predetermined pressure, the biogas is discharged out of the cylinder 110 through the biogas inlet/outlet 112. In this way, compression of the biogas is performed.

A baffle plate 116 is installed in the cylinder 110, specifically above the water inlet/outlet 114. The baffle plate 116 prevents water from being suddenly introduced into the cylinder 110 through the water inlet/outlet 114, thereby preventing water from sloshing and swirling in the cylinder 110. Therefore, compression of the biogas in the cylinder 100 is facilitated.

In addition, a demister filter 118 is installed in the cylinder 110, specifically under the biogas inlet/outlet 112, thereby preventing water or moisture from escaping from the cylinder 110 through the biogas inlet/outlet 112.

The water piston device 100 may further include a sensor unit 140 connected to the cylinder 110. The sensor unit 140 functions to measure and control states of water and biogas in the cylinder 110. The sensor unit 140 includes a first level switch 142, a second level switch 144, a first pressure detection sensor 146.

Specifically, the first level switch 142 is connected to an upper portion of the cylinder 110 and checks whether the level of water in the cylinder 110 is at the top dead point, and the second level switch 144 is connected to a lower portion of the cylinder 110 and checks whether the level of water in the cylinder 110 is at the bottom dead point.

That is, the first and second level switches 142 and 144 are used to detect the amount of water in the cylinder 110 and thus to determine whether it is necessary to supply biogas or water into the cylinder 110.

In addition, the first pressure sensor 146 is connected to the cylinder 110 and measures the pressure of biogas in the cylinder 110. That is, it is possible to check whether the biogas in the cylinder 110 is compressed to a predetermined pressure by using the first pressure detection sensor 146.

A biogas adjustment unit 120 is installed in the biogas inlet/outlet 112. The biogas adjustment unit 120 adjusts and controls the flow of biogas introduced into or discharged out of the cylinder 110. The biogas adjustment unit 120 includes a check valve 122, a compressed biogas discharge valve 24, a first safety valve 126.

Specifically, the check valve 122 allows or blocks entry of biogas into the cylinder 110 through the biogas inlet/outlet 112, and the compressed biogas discharge valve 124 enables biogas compressed to a predetermined pressure to be discharged out of the cylinder 110 through the biogas inlet/outlet 112.

The first safety valve 126 discharges overcompressed biogas out of the cylinder when the biogas in cylinder 110 is over compressed to a pressure higher than a predetermined safety pressure. When the first pressure detection sensor 146 detects that the pressure of biogas in the cylinder 110 is equal to or higher than the predetermined safety pressure, the first safety valve 126 operates to discharge the compressed biogas out of the cylinder 110, thereby lowering the pressure of biogas in the cylinder 110.

A three-way water inlet/outlet valve 130 is connected to the water inlet/outlet 114 of the cylinder 110. The three-way water inlet/outlet valve 130 controls the flow of water introduced into or discharged out of the cylinder 110 through the water inlet/outlet 114.

The three-way water inlet/outlet valve 130 is connected not only to the water inlet/outlet 114 of the cylinder 110 but also to a water supply/recovery device 300 and a pressure maintaining unit 400 which are described below.

Next, a preferred embodiment of a biogas compression system 10 using the water piston device according to the present invention will be described with reference to the accompanying drawings.

As illustrated in FIG. 2, a biogas compression system 10 using the water piston device according to the present invention roughly includes a blower 200, a water piston device 100, and a water supply/recovery device 300. The blower 200 is connected to the water piston device 100 and supplies biogas to the water piston device 100. The blower 200 is used to supply biogas generated from an anaerobic digestion process to a cylinder 110 of the water piston device 100 through a pipe.

The water piston device 100 is connected between the blower 200 and the water supply/recovery device 300 described below, and compresses the biogas supplied by the blower 200 to a predetermined biogas pressure using the pressure of water (pressurized water) supplied from the water supply/recovery device 300. The water piston device 100 includes: a cylinder having a biogas inlet/outlet 112 provided at an upper end portion thereof and connected to the blower 200 and a water inlet/outlet 114 provided at a lower end portion thereof and connected to the water supply/recovery device 300 and a pressure maintaining unit 400 via a three-way water inlet/outlet valve 130; a biogas adjustment unit 120 connected to the cylinder 110; a sensor unit 140; and the three-way water inlet/outlet valve 130. Since the construction of this water piston device is the same as that of the water piston device 100 described above, a repetitive description thereof will be omitted.

The water supply/recovery device 300 is connected to the water piston device 100 via the three-way water inlet/outlet valve 130 and functions to supply or recover water used to compress biogas. The water supply/recovery device 300 includes a water tank 310, a booster pump 320, and a level detection sensor 330.

Specifically, the water tank 310 is connected to the water inlet/outlet 114 of the water piston device 100 via a pipe and the three-way water inlet/outlet valve 130. The water tank 310 stores water used to compress the biogas. The booster pump 320 is connected to the water tank 310 and functions to cause the water stored in the water tank 310 to be supplied to the cylinder 110 of the water piston device 100 while maintaining a predetermined pressure. The booster pump 230 may be a pump equipped with an inverter that controls a rotation speed.

The level detection sensor 330 is installed in the water tank 310 and detects and controls the amount of water contained in the water tank 310.

As illustrated in FIG. 2, the water piston device 100 according to the present invention may include a plurality of water piston devices connected in parallel between the blower 200 and the water supply/recovery device 300. In this case, it is possible to reduce a time required for biogas to be compressed.

In this case, a pressure maintaining unit 400 may be provided between the water piston device 100 and the blower 200. The pressure maintaining unit 400 prevents pressure drop of water which is likely to occur when multiple water piston devices 100 are used and also prevents the pressure of water supplied to the water piston device 100 from exceeding a predetermined water pressure.

Specifically, the pressure maintaining unit 400 includes a pressure tank 410, a third level switch 420, a fourth level switch 430, a second pressure detection sensor 440, and a second safety valve 450. The pressure tank 410 stores water (pressurized water) to be introduced into the water piston device 100. As the pressure tank 410, a conventional expansion tank or a conventional buffer tank may be used.

The third and fourth level switches 420 and 430 function to detect the top dead point and the bottom dead point of the water in the pressure tank 410 like the first and second level switches 142 and 144. The second pressure detection sensor 440 detects and controls the pressure of water stored in the pressure tank 410. The second safety valve 450 is connected to the pressure tank 410. When the pressure of water stored in the pressure tank 410, which is detected by the second pressure sensor 440, is equal to or higher than a predetermined safety pressure, the second safety valve 450 performs control such that a highly compressed gas in the pressure tank 410 can be safely discharged out of the pressure tank 410.

That is, the pressure maintaining unit 400 is connected to the three-way water inlet/outlet valve 130. Thus, when the pressure of water supplied to the water piston device 100 from the water supply/recovery device 300 is higher or lower than a predetermined pressure, the pressure maintaining unit 400 causes the pressure of water supplied to the water piston device 100 to be maintained at a predetermined value by causing the water stored in the pressure tank 410 to be supplied to the water piston device 100 through the three-way water inlet/outlet valve 130.

The biogas compression system 10 using the water piston device according to the device may further include a control panel 500. The control panel 500 is used to control operations of the water piston device 100, the blower 200, the water supply/recovery device 300, and the pressure maintaining unit 400 constituting the biogas compression system 10.

Specifically, the control panel 500 is configured to control overall operation of the biogas compression system 10 using the water piston device according to the present invention through the following process: controlling the flow of water introduced into and discharged out of the water piston device 100 by receiving a signal from the sensor unit 140 provided in the water piston device 100 and controlling the three-way water inlet/outlet valve 130 on the basis of the signal received from the sensor unit 140; controlling the flow of biogas introduced into and discharged out of the water piston device 100 by receiving a signal from the biogas adjustment unit 120; and adjusting the pressure of water supplied to the water piston device 100 by controlling the booster pump 320 provided in the water supply/recovery device 300.

An operation process of the biogas compression system 10 using the water piston device according to the present invention will be described below.

First, in a state in which cylinder 110 of the water piston device 100 is filled with water i.e. when the water level reaches the top dead end, the check valve 122 installed in the biogas inlet/outlet 112 of the cylinder 110 and the three-way water inlet/outlet valve 130 installed in the water inlet/outlet 114 are simultaneously opened and the blower 200 is driven to operate so that biogas generated from an anaerobic digestion process can be introduced into the cylinder 110, and water stored in the cylinder 110 is discharged to the water tank 310 of the water supply/recovery device 300.

When it is detected that the water is discharged up to the bottom dead point by the second level switch 144, the control panel 500 is manipulated to stop the operation of the blower 200 and to close the three-way water inlet/outlet valve 130, thereby preventing biogas from being introduced into the cylinder 110 and preventing the water from being discharged out of the cylinder 110.

Next, the control panel 500 is manipulated to operate the booster pump 320 of the water supply/recovery device 300, thereby causing the water (pressurized water) pressurized to a predetermined pressure in the water tank 310 to be introduced into the cylinder 110 through the three-way water inlet/outlet valve 130 and the water inlet/outlet 114.

At this point, the baffle plate 116 installed above the water inlet/outlet 114 prevents the water from rushing into the cylinder.

Next, when the cylinder 110 is filled with the water introduced through the water inlet/outlet 114, the biogas contained in the cylinder 110 is compressed by a piston action. In this process, until the pressure of the biogas reaches a predetermined pressure, the compressed biogas discharge valve 124 installed in the biogas inlet/outlet 112 prevents the biogas from being discharged out of the cylinder 110.

When it is detected that the biogas is compressed to a predetermined pressure in the cylinder 110 by the first pressure detection sensor 146, the compressed biogas is discharged out of the cylinder 110 through the compressed biogas discharge valve 124.

The water that is continuously supplied to the cylinder 110 through the water inlet/outlet 114 while maintaining a predetermined pressure even during a period in which the compressed biogas is discharged out of the cylinder 110, so that compressed biogas can be continuously generated and discharged. When it is detected that the water is supplied up to the top dead point by the first level switch 142, generation of the compressed biogas in the cylinder 110 is stopped. At this point, the three-way water inlet/outlet valve 130 is closed so that water (pressurized water) cannot be introduced into the cylinder 110.

The process described above is a single cycle of biogas compression. By repeating the cycle of biogas compression, biogas can be rapidly and adequately compressed.

As described above, when the pressure of water introduced into the cylinder 110 from the water supply/recovery device 300 is higher or lower than a predetermined pressure, the pressure maintaining unit 400 is operated through manipulation of the control panel 500. The pressure maintaining unit 400 adjusts a rotation speed of the booster pump 32 of the water supply/recovery device 300, thereby continuously maintaining the pressure of water introduced into the cylinder 110.

According to the water piston device and the biogas compression system 10 using the water piston device described above, it is possible to compress biogas using only the pressure of water without using an additional apparatus. Therefore, it is possible to prevent parts from being corroded by biogas, resulting in improvement in durability of the parts and reduction in installation and maintenance costs of the system. In addition, with the use of multiple water piston devices 100, it is possible to considerably reduce a biogas compression time. Furthermore, with the use of a pressure maintaining unit, it is possible to constantly maintain the pressure of water supplied to the cylinder.

Although the preferred embodiments of the present invention have been disclosed for illustrative purposes, those skilled in the art will appreciate that the present invention is not limited to the preferred embodiments and various modifications, additions and substitutions are possible, without departing from the scope and spirit of the present invention as disclosed in the accompanying claims.

### Industrial Applicability

The present invention relates to a water piston device and a biogas compression system using same. More specifically, the present invention relates to a water piston device and a biogas compression system using same, the device and system being capable of compressing biogas using only the pressure of water without using an additional apparatus, thereby preventing parts from being corroded by the biogas, resulting in improvement in durability of the parts.

## Claims

1. A water piston device comprising:
a cylinder to be filled with biogas and water;
a biogas inlet/outlet provided at an upper portion of the cylinder;
a water inlet/outlet provided at a lower portion of the cylinder,
the water piston device compressing the biogas using pressure of water introduced into the cylinder through the water inlet/outlet.

2. The water piston device according to claim 1, wherein a baffle plate preventing water from rushing into the cylinder through the water inlet/outlet is installed at a lower portion within the cylinder.

3. The water piston device according to claim 1, wherein a demister filter preventing water or moisture from escaping from the cylinder through the biogas inlet/outlet is installed at an upper portion within the cylinder.

4. The water piston device according to claim 1, wherein a first level switch and a second level stitch are provided at an upper portion and a lower portion of the cylinder to check whether the water in the cylinder reaches a top dead point and a bottom dead point, respectively.

5. The water piston device according to claim 1, wherein a first pressure detection sensor is provided in the cylinder to detect a pressure of the biogas in the cylinder.

6. The water piston device according to claim 1, wherein the biogas inlet/outlet is provided with a check valve allowing biogas to be introduced into the cylinder, a compressed biogas discharge valve allowing compressed biogas in the cylinder to be discharged out of the cylinder, and a first safety valve causing the compressed biogas to be discharged out of the cylinder when a pressure of the biogas in the cylinder rises to reach or exceed a predetermined safety pressure.

7. The water piston device according to claim 1, wherein the water inlet/outlet is connected to a three-way water inlet/outlet valve controlling flow of water such that the water is introduced into and discharged out of the cylinder.

8. A biogas compression system using a water piston device, comprising:
a blower for supplying biogas;
a water piston device connected to the blower and compressing the biogas supplied by the blower using pressure of water; and
a water supply/recovery device connected to the water piston device to supply or recover water used to compress the biogas.

9. The biogas compression system according to claim 8, wherein the water piston device comprises:
a cylinder having a biogas inlet/outlet provided at an upper portion thereof and connected to the blower and a water inlet/outlet provided at a lower portion thereof and connected to the water supply/recovery device;
a biogas adjustment unit installed in the biogas inlet/outlet and adjusting and controlling flow of biogas introduced into or discharged out of the cylinder; and
a three-way water inlet/outlet valve installed in the water inlet/outlet and controlling flow of water introduced into the cylinder.

10. The biogas compression system according to claim 9, wherein the water piston device further comprises a sensor unit measuring and controlling states of water and biogas in the cylinder.

11. The biogas compression system according to claim 8, wherein the water supply/recovery device comprises: a water tank connected to the water piston device and storing water used to compress the biogas; a booster pump pumps the water in the water tank such that the water is supplied to water piston device while maintaining a constant water pressure; and a level detection sensor detecting an amount of water in the water tank.

12. The biogas compression system according to claim 8, wherein the water piston device comprises a plurality of water piston devices connected in parallel between the blower and the water supply/recovery device.

13. The biogas compression system according to claim 12, wherein a pressure maintaining unit is installed between the water piston device and the water supply/recovery device to control flow of water supplied to the water piston device such that a predetermined pressure of the water is maintained.

14. The biogas compression system according to claim 13, wherein the pressure maintaining unit includes a pressure tank connected and installed between the water piston device and the water supply/recovery device, a third level switch and a fourth level switch used to check whether the water in the pressure tank reaches a top dead end and a bottom dead end, respectively, a second pressure detection sensor measuring the pressure of the water in the pressure tank, and a second safety valve performs control such that compressed air in the pressure tank is discharged out of the pressure tank when the pressure of the water in the pressure tank reaches a predetermined safety pressure.

15. The biogas compression system according to claim 13, further comprising a control panel used to control operations of the water piston device, the water supply/recovery device, and the pressure maintaining unit.
